# EUROPÄISCHE PATENTSCHRIFT

(11) **EP 2 444 261 B1**
(45) Veröffentlichungstag und Bekanntmachung des Hinweises auf die Patenterteilung: **08.05.2013**
(21) Anmeldenummer: 10188118.3
(22) Anmeldetag: 19.10.2010
(51) Int. Cl.: A01B 59/06, B60D 1/14, B62D 49/06

(54) **Kupplungssystem für Anbaugeräte an ein Mehrzweckfahrzeug**
Coupling system for connection devices for a multiple use vehicle
Système d'attelage pour appareils de montage sur un véhicule polyvalent

(43) Veröffentlichungstag der Anmeldung: 25.04.2012
(73) Patentinhaber: Hako-Werke GmbH, 23843 Bad Oldesloe (DE)
(72) Erfinder: Maut, Rolf-Jürgen, 13129 Berlin (DE); Ngwenya, Mpilo, 14557 Wilhelmshorst (DE)
(74) Vertreter: UEXKÜLL & STOLBERG

(56) Entgegenhaltungen:
- EP-A1- 1 103 171
- WO-A1-2006/080038
- DE-A1- 3 736 872
- US-A- 3 716 253
- US-A- 5 950 735

## Beschreibung

Die vorliegende Erfindung betrifft ein Kupplungssystem zum Ankoppeln von Anbaugeräten an ein Mehrzweckfahrzeug, mit einem Fahrzeugkupplungselement zum höhenverstellbaren Anbringen an das Mehrzweckfahrzeug, wobei das Fahrzeugkupplungselement eine erste und eine zweite Strebe aufweist, die sich von einen Verbindungspunkt nach unten weg erstrecken, sodass die Streben ein Dreieck bilden, wobei jede Strebe eine vordere Anlagefläche aufweist, die parallel zu der durch das Dreieck gebildeten Ebene verläuft und die bei am Mehrzweckfahrzeug angebrachtem Fahrzeugkupplungselement von diesem weg weist und wobei jede Strebe eine seitliche Anlagefläche aufweist, die senkrecht oder geneigt zu der vorderen Anlagefläche verläuft und die von dem von den Streben begrenzten Bereich weg weist, mit einem Gerätekupplungselement zur Befestigung an einem Anbaugerät, wobei das Gerätekupplungselement eine erste und eine zweite Haltestrebe aufweist, die sich von einen Verbindungspunkt nach unten weg erstrecken, sodass die Haltestreben ein Dreieck bilden, wobei jede Haltestrebe eine vordere Auflagefläche aufweist, die parallel zu der durch das Dreieck gebildeten Ebene verläuft, wobei jede Haltestrebe eine seitliche Auflagefläche aufweist, die senkrecht oder geneigt zu der vorderen Auflagefläche verläuft und die bei am Anbaugerät angebrachtem Gerätekupplungselement zu dem von den Haltestreben begrenzten Bereich hin weist, wobei die Haltestreben einen in Erstreckungsrichtung der Haltestreben gesehen L-förmigen Querschnitt aufweisen, wobei das Gerätekupplungselement im Bereich des Verbindungspunktes der Haltestreben eine Eingriffsplatte aufweist, die sich beabstandet zu den vorderen Auflageflächen erstreckt und zu diesen weist, wobei im Bereich der von dem Verbindungspunkt wegweisenden freien Enden der Haltestreben Riegelelemente vorgesehen sind, die sich über die Kante der Schenkel der Haltestreben mit der seitlichen Auflagefläche hinaus von den vorderen Auflageflächen weg erstrecken, und wobei am Fahrzeugkupplungselement im Bereich der von dem Verbindungspunkt wegweisenden freien Enden der Streben eine erste und eine zweite Riegeleinrichtung zum Eingriff mit den Riegelelementen vorgesehen ist, wobei die Riegelelemente und die Riegeleinrichtungen derart ausgestaltet sind, dass beim Eingriff eine Bewegung der Haltestreben weg von den Streben in einer Richtung senkrecht zu der durch die Streben aufgespannten Ebene verhindert wird. Des Weiteren betrifft die vorliegende Erfindung ein Fahrzeugkupplungselement.

Aus dem Stand der Technik sind sogenannte Dreieckskupplungen bekannt, mit deren Hilfe Anbaugeräte an ein Mehrzweckfahrzeug wie beispielsweise eine Bodenreinigungsmaschine angekoppelt werden können. Bei den Anbaugeräten kann es sich beispielsweise um Mäheinrichtungen, Kehreinrichtungen oder Räumschilder handeln. Derartige Dreieckskupplungssysteme weisen zum einen ein Fahrzeugkupplungselement auf, das in der Regel höhenverstellbar an dem Mehrzweckfahrzeug angebracht ist und zwei dreiecksförmig angeordnete Streben umfasst, die sich von einem Verbindungspunkt am oberen Ende des Elements nach unten weg erstrecken. Zum anderen ist an den Anbaugeräten ein Gerätekupplungselement vorgesehen, das ebenfalls zwei sich von einem Verbindungspunkt dreieckförmig nach unten erstreckende Haltestreben aufweist. Dabei haben die Haltestreben einen von oben in Erstreckungsrichtung der Haltestreben gesehen U-förmigen Querschnitt, wobei die Öffnung zu dem von den Streben eingeschlossenen Bereich weist. Schließlich ist an dem Fahrzeugkupplungselement noch im Bereich des Verbindungspunktes ein Riegel vorgesehen, der federvorgespannt ist und mit einer Öffnung im Gerätekupplungselement ebenfalls im Bereich des Verbindungspunktes eingreifen kann.

Zum Koppeln des Gerätekupplungselements mit dem Fahrzeugkupplungselement wird das Fahrzeugkupplungselement zunächst mit Hilfe des Mehrzweckfahrzeugs und der daran angebrachten Hebevorrichtung unmittelbar unterhalb des Gerätekupplungselements angeordnet, wobei der Verbindungspunkt am Fahrzeugkupplungselement unterhalb des Verbindungspunktes des Gerätekupplungselements liegt. Anschließend wird das Fahrzeugkupplungselement angehoben, so dass dessen Streben in den U-förmig ausgebildeten Haltestreben am Gerätekupplungselement aufgenommen werden. Wenn das Fahrzeugkupplungselement hinreichend weit nach oben gefahren worden ist, rastet der Riegel am Fahrzeugkupplungselement in der Aussparung am Gerätekupplungselement ein, so dass verhindert wird, dass das Fahrzeugkupplungselement sich wieder nach unten aus dem Gerätekupplungselement herausbewegen kann.

Nachteilig an einer derartigen Dreieckskupplungssystem mit einem Gerätekupplungselement, dessen Streben einen U-förmigen Querschnitt aufweisen, ist, dass die Kupplungselemente beim Ankoppeln derart zueinander ausgerichtet sein müssen, dass die Streben beider Elemente in einer gemeinsamen Ebene verlaufen, die Kupplungselemente also nicht zueinander verkippt sein dürfen. Ist dieses nicht der Fall, besteht die Gefahr, dass das Fahrzeugkupplungselement sich in dem Gerätekupplungselement verkantet und die Kupplungselemente nur unter großem Kraftaufwand wieder voneinander getrennt werden können, wobei zu berücksichtigen ist, dass die Anbaugeräte häufig ein hohes Eigengewicht aufweisen.

Auf der anderen Seite ist es aber wünschenswert, dass Anbaugeräte, die noch mit einem Gerätekupplungselement gemäß dem Stand der Technik versehen sind, auch von geänderten Fahrzeugkupplungselementen aufgenommen werden können. Das bedeutet, dass es eine Anforderung bei der Konstruktion eines Kupplungssystems ist, dass das Fahrzeugkupplungselement derart kompatibel ausgestaltet ist, dass es auch alte Anbaugeräte haltern kann.

Ausgehend vom nächstkommenden Stand der Technik, der WO 2006/080038 A1, ist es daher die Aufgabe der vorliegenden Erfindung, ein Kupplungssystem zum Ankoppeln von Anbaugeräten an ein Mehrzweckfahrzeug bereitzustellen, das ein einfaches Ankoppeln ermöglicht, wobei die Kupplungselemente auch verkippt zueinander angeordnet sein können, und das darüber hinaus derart ausgestaltet ist, dass auch Anbaugeräte mit Kupplungselementen gemäß dem Stand der Technik von dem Fahrzeugkupplungselement aufgenommen werden können.

Diese Aufgabe wird gemäß einem ersten Aspekt der vorliegenden Erfindung durch ein Kupplungssystem gelöst, das dadurch gekennzeichnet ist, dass die erste und die zweite Riegeleinrichtung am Fahrzeugkupplungselement derart über ein Kopplungselement gekoppelt sind, dass bei Betätigung der ersten Riegeleinrichtung auch die zweite Riegeleinrichtung betätigt wird. Dies hat den Vorteil, dass durch einen einzigen Betätigungsvorgang beide Riegeleinrichtungen mit den jeweiligen Riegelelementen in Eingriff oder außer Eingriff gebracht werden können. Dadurch, dass die Haltestreben des Gerätekupplungselements L-förmig ausgebildet sind und nur im Bereich des Verbindungspunktes der Haltestrebe eine Eingriffsplatte vorgesehen ist, kann zu Beginn des Ankoppelvorganges der Bereich des Verbindungspunktes des Fahrzeugkupplungselements auch dann in das Gerätekupplungselement eingeschoben werden, wenn beide Elemente verkippt zueinander sind. Wird dann das Fahrzeugkupplungselement mit Hilfe einer Hebeeinrichtung weiter angehoben, wird auch das Anbaugerät angehoben, wobei sich aufgrund von dessen Gewicht ergibt, dass sich die vorderen An- und Auflageflächen von Fahrzeugkupplungselement und Gerätekupplungselement aneinander anlegen. Somit wird erreicht, dass sich beide Kupplungselemente aufgrund des Gewichts des Anbaugeräts "automatisch" in der richtigen Weise zueinander ausrichten. Allerdings ist es bei dem erfindungsgemäßen System nicht zwingend erforderlich, dass Fahrzeugkupplungselement und Gerätekupplungselement beim Ankoppeln anfänglich verkippt zueinander sind. Ein Ankoppeln kann auch bei parallel stehenden Elementen stattfinden.

Wenn diese Ausrichtung erreicht ist, kann mit Hilfe der Riegeleinrichtungen am Fahrzeugkupplungselement, die mit den Riegelelementen am Gerätekupplungselement eingreifen, verhindert werden, dass sich danach die Kupplungselemente relativ zueinander verschwenken können.

Da außerdem die Riegeleinrichtungen im Bereich des freien Endes der Streben des Fahrzeuggerätekupplungselements angeordnet sind, verhindern sie nicht, dass das Fahrzeuggerätekupplungselement dennoch in ein Gerätekupplungselement mit Streben mit U-förmigen Querschnitt eingeschoben werden kann.

Dadurch wird also erreicht, dass das Fahrzeugkupplungselement gemäß des erfindungsgemäßen Systems auch mit Gerätekupplungselementen gemäß dem Stand der Technik verbunden werden kann.

In diesem Zusammenhang sollen unter den Begriff "L-förmig" im Sinne der vorliegenden Erfindung nicht nur solche Haltstreben fallen, deren Schenkel rechtwinklig zueinander verlaufen, sonder dieser Begriff soll auch solche Haltestreben decken, bei denen die Schenkel einen Winkel einschließen, der größer als 90° ist.

Vorteilhafterweise ist die Eingriffsplatte geneigt zu den vorderen Auflagefläche an den Haltestreben angebracht, um ein Einsetzen des Fahrzeuggerätekupplungselements in das Gerätekupplungselement zu vereinfachen.

Ferner ist es bevorzugt, wenn das Fahrzeugkupplungselement im Bereich des Verbindungspunkts einen federvorgespannten schwenkbaren Riegel aufweist, der zum Eingriff mit einer Öffnung im Bereich des Verbindungspunktes eines Gerätekupplungselements gemäß dem Stand der Technik vorgesehen ist.

Gemäß einem bevorzugten Ausführungsbeispiel der vorliegenden Erfindung sind die Riegelelemente am Gerätekupplungselement an dem Schenkel der Haltestreben mit den seitlichen Auflageflächen auf der Seite angeordnet, die von dem Bereich abgewandt ist, der von den Haltestreben eingeschlossen ist. Somit sind die Riegelelemente auf der Außenseite des durch die Haltestreben gebildeten Kupplungsdreiecks angeordnet. Auf diese Weise wird der von den Haltestreben bzw. Streben abgeschirmte Bereich von den Riegelelementen freigehalten, so dass dieser Bereich beispielsweise für Kraftübertragungselemente wie einen Zapfwellenantrieb verwendet werden kann. Außerdem wird dadurch sichergestellt, dass das Fahrzeugkupplungselement in den von den Haltestreben des Gerätekupplungselements begrenzten Raum eingesetzt werden kann, ohne das dies durch Bauteile daran behindert wird.

Dabei ist es ebenfalls bevorzugt, wenn die Riegelelemente als sich senkrecht zu der vorderen Auflagefläche erstreckende Bolzen ausgebildet sind, die am von der vorderen Auflagefläche wegweisenden Ende einen erweiterten Querschnitt aufweisen. Dadurch wird eine einfache Ausgestaltung der Riegelelemente erreicht, die vergleichsweise robust und von einfach aufgebauten Riegeleinrichtungen erfasst werden kann.

Des Weiteren ist es bevorzugt, wenn die erste und die zweite Riegeleinrichtung jeweils einen ersten und zweiten Riegelarmaufweisen und die Riegelarme schwenkbar an den Streben gehaltert sind, wobei in den Riegelarmen eine Aussparung zur Aufnahme der Bolzen vorgesehen ist. Hierbei kann durch einen einfachen Schwenkvorgang ein Eingriff zwischen den Riegelarmen und den Bolzen an dem Gerätekupplungselement erreicht werden.

Ferner ist es bevorzugt, wenn der erste Riegelarm mit einem Armabschnitt versehen ist, der sich über die Schwenkachse hinaus weg von der Aussparung erstreckt, und eine Kopplungsstange vorgesehen ist, deren erstes Ende schwenkbar an dem Armabschnitt angelenkt ist und deren zweites Ende schwenkbar an dem zweiten Riegelarm der zweiten Riegeleinrichtung auf der Seite von dessen Schwenkachse angelenkt ist, auf der die Aussparung vorgesehen ist. Bei diesem Aufbau wird eine einfache Kopplung der Riegelarme erreicht, wobei es dann lediglich erforderlich ist, einen der beiden Riegelarme zu bewegen, um eine Ver- oder Entriegelung zu bewirken. Insbesondere wird bei einem derartigen Aufbau erreicht, dass die Riegelarme beim Betätigen eines Riegelarms gegensinnig zueinander schwenken.

Des Weiteren ist es bevorzugt, wenn der erste Riegelarm ein schwenkbares Verriegelungselement aufweist, das eine Verriegelungsfläche zur Anlage an den Bolzen aufweist, wobei der Anlagepunkt zwischen dem Bolzen und dem Verriegelungselement auf der von dem Verbindungspunkt abgewandten Seite der Verbindungslinie zwischen der Schwenkachse des ersten Riegelarms und dessen Aussparung liegt, wobei die Schwenkachse des Verriegelungselements auf der von dem Verbindungspunkt abgewandten Seite der Verbindungslinie zwischen der Schwenkachse des ersten Riegelarms und dessen Aussparung liegt und wobei der erste Riegelarm einen Anschlag aufweist, der ein Verschwenken des Verriegelungselements weg von der Verbindungslinie zwischen der Schwenkachse des ersten Riegelarms und dessen Aussparung verhindert. Durch ein derartiges einfach aufgebautes Verriegelungselement kann sichergestellt werden, dass eine Bewegung des Gerätekupplungselements nach oben weg von dem Fahrzeugkupplungselement in einfacher Weise verhindert wird. Auf der anderen Seite kann der Riegelarm leicht dadurch entriegelt werden, dass das Verriegelungselement vom Anschlag weg verschwenkt wird.

Des Weiteren wird die zuvor genannte Aufgabe gemäß einem zweiten Aspekt der vorliegenden Erfindung durch ein Fahrzeugkupplungselement zum höhenverstellbaren Anbringen an ein Mehrzweckfahrzeug und zum Ankoppeln eines Gerätekupplungselements gemäß Anspruch 9 gelöst, wobei damit ebenfalls die bereits im Zusammenhang mit dem Kupplungssystem genannten Vorteile erreicht werden. Insbesondere kann mit einem derartigen Fahrzeuggerätekupplungselement das Ziel verwirklicht werden, sowohl Gerätekupplungselemente mit Haltestreben mit U-förmigem Querschnitt aufnehmen zu können als auch solche, deren Haltestreben einen L-förmigen Querschnitt aufweisen.

Im Folgenden wird die vorliegende Erfindung anhand eines bevorzugten Ausführungsbeispiels eines erfindungsgemäßen Kupplungssystems beschrieben, wobei
- Fig. 1: das Ausführungsbeispiel des erfindungsgemäßen Kupplungssystems in perspektivischer Darstellung zeigt,
- Fig. 2: das Kupplungssystem aus Fig. 1 in Draufsicht aus Richtung des Fahrzeugkupplungselements zeigt,
- Fig. 3: das Gerätekupplungselement des Ausführungsbeispiels aus Fig. 1 in perspektivischer Darstellung zeigt,
- Fig. 4: das Gerätekupplungselement aus Fig. 3 in Draufsicht vom Mehrzweckfahrzeug aus gesehen zeigt und
- Fig. 5: eine perspektivische Darstellung des Fahrzeuggerätekupplungselements des Ausführungsbeispiels aus Fig. 1 zeigt.

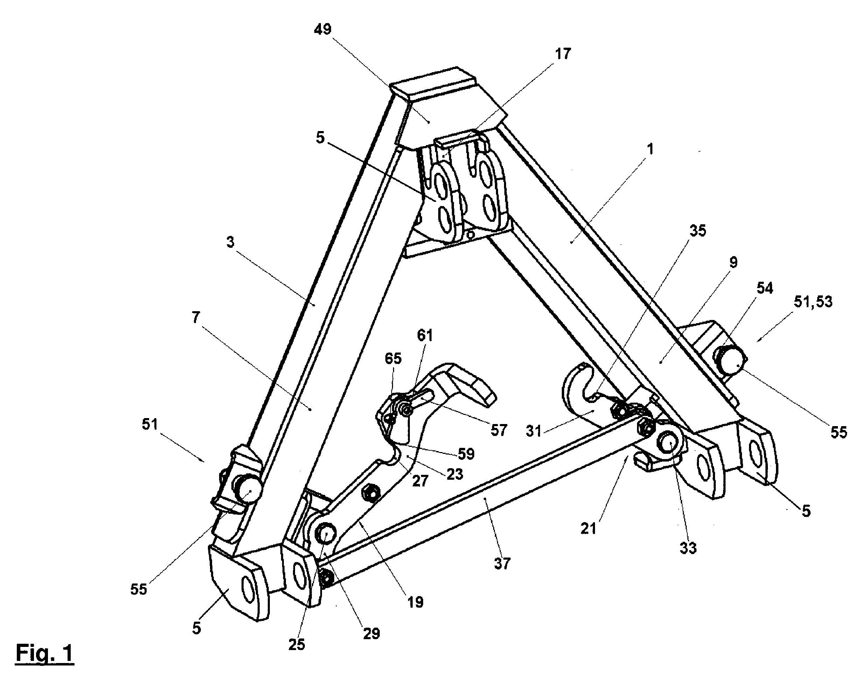

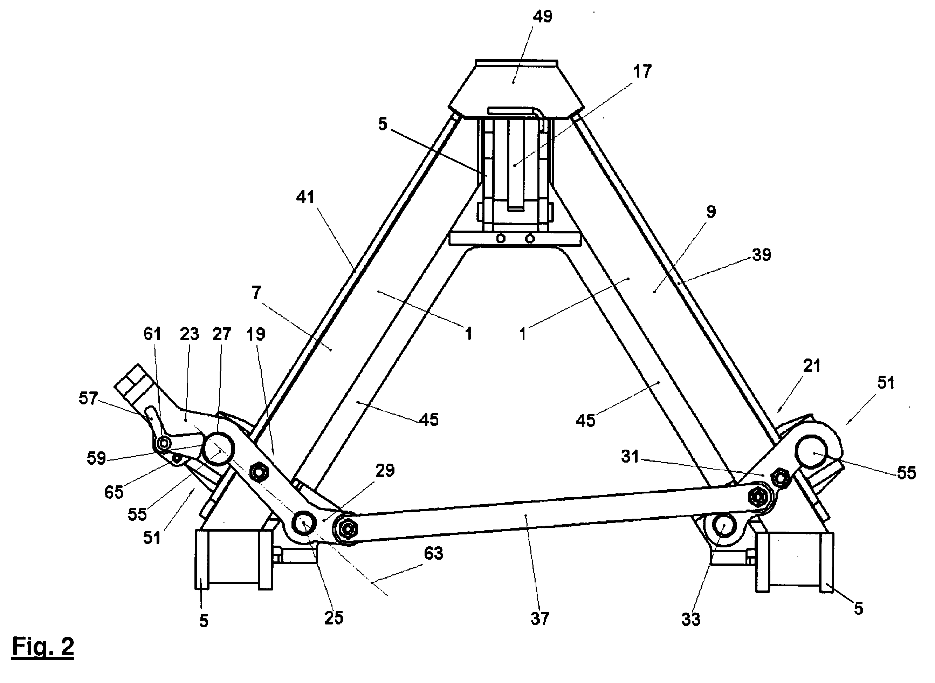

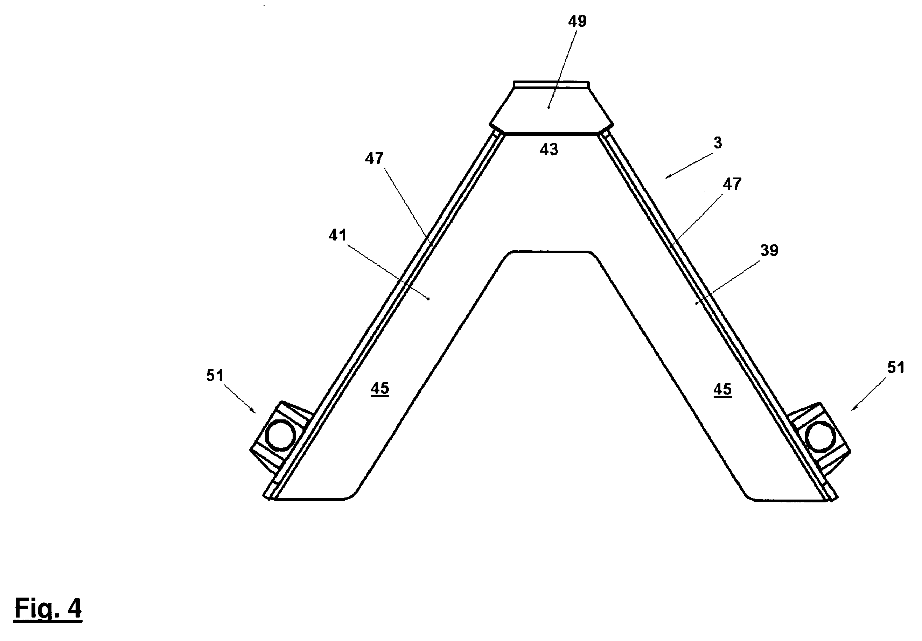

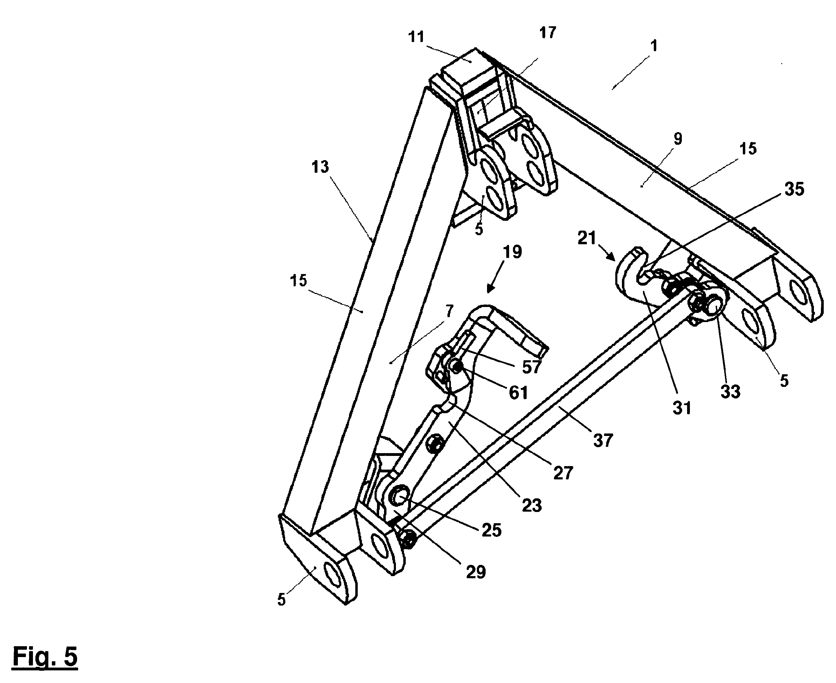

Wie insbesondere aus Fig. 4 und 5 hervorgeht, weist das in Fig. 1 und 2 in gekoppeltem Zustand dargestellte Kupplungssystem ein Fahrzeugkupplungselement 1 und ein Gerätekupplungselement 3 auf, wobei das Fahrzeugkupplungselement 1 im Gerätekupplungselement 3 aufgenommen werden kann (siehe Fig. 1).

Aus Fig. 5 ist zu erkennen, dass das Fahrzeugkupplungselement 1, das über Befestigungslaschen 5 mit einer Einrichtung zur Höhenverstellung, die wiederum an einem Mehrzweckfahrzeug angebracht ist, verbunden werden kann, eine erste Strebe 7 und eine zweite Strebe 9 aufweist. Die erste und die zweite Strebe 7, 9 erstrecken sich von einem Verbindungspunkt 11 aus dreiecksförmig nach unten weg, so dass durch die Streben 7, 9 ein Dreieck aufgespannt wird. Jede Strebe 7, 9 weist eine vordere Anlagefläche 13 auf, die parallel zu der durch das Dreieck gebildeten Ebene verläuft und die bei einem am Mehrzweckfahrzeug angebrachtem Fahrzeugkupplungselement 1 von diesem weg weist, also auf der von den Befestigungslaschen 5 wegweisenden Seite der Streben 7, 9 vorgesehen ist.

Ferner weisen die Streben 7, 9 seitliche Anlageflächen 15 auf, die im vorliegenden Ausführungsbeispiel senkrecht zu der vorderen Anlagefläche 13 verlaufen, allgemein aber auch geneigt dazu angeordnet sein können, wobei dies vom Aufbau des Gerätekupplungselement 3 abhängt. Außerdem sind die seitlichen Anlageflächen 15 derart angeordnet, dass sie von dem von den Streben 7, 9 eingeschlossen Bereich weg weisen, also auf den Außenseiten der Streben angeordnet sind.

In den Fig. 2 und 5 ist des Weiteren zu erkennen, dass im Bereich des Verbindungspunktes 11 das Fahrzeugkupplungselement 1 einen schwenkbar angebrachten Riegel 17 aufweist, der einen Vorsprung an seinem freien Ende hat, der mit einer Aussparung in einem Gerätekupplungselement gemäß dem Stand der Technik eingreifen kann.

Aus Fig. 2 und 5 ist außerdem zu erkennen, dass an dem Fahrzeugkupplungselement 1 jeweils an den freien, von dem Verbindungspunkt 11 wegweisenden Enden der Streben 7, 9 eine erste und eine zweite Riegeleinrichtung 19, 21 vorgesehen ist.

Die erste Riegeleinrichtung 19 weist einen ersten Riegelarm 23 auf, der schwenkbar um eine Schwenkachse 25 im Bereich des freien Endes der ersten Strebe 7 daran gehaltert ist. In dem ersten Schwenkarm 23 ist eine Aussparung 27 vorgesehen, die kreisausschnittsförmig ausgebildet ist. Außerdem weist der erste Riegelarm 23 einen Abschnitt 29 auf, der sich über die Schwenkachse 25 hinaus weg von der Aussparung 27 erstreckt.

Die zweite Riegeleinrichtung 21 weist einen zweiten Riegelarm 31 auf, der schwenkbar um eine Schwenkachse 33 im Bereich des freien Endes der zweiten Strebe 9 daran gehaltert ist. Der zweite Riegelarm 31 weist ebenfalls eine Aussparung 35 mit kreisausschnittsförmigem Querschnitt auf.

Schließlich ist eine Kopplungsstange 37 vorgesehen, die im vorliegenden Ausführungsbeispiel gradlinig ausgebildet ist, aber auch einen gebogenen Verlauf haben kann, um den Bereich zwischen den Streben 7, 9 vollständig freizugeben. Die Kopplungsstange 37 ist mit einem ersten Ende schwenkbar an dem freien Ende des Abschnitts 29 an dem ersten Riegelarm 23 angelenkt. Das zweite Ende der Kopplungsstange 37 ist schwenkbar an den Bereich des zweiten Riegelarms 31 angelenkt, der auf der Seite von dessen Schwenkachse 33 liegt, auf der auch die Aussparung 35 vorgesehen ist.

Durch die Kopplungsstange 37 wird erreicht, dass ein Kopplungselement vorgesehen ist, das bei Betätigung der ersten Riegeleinrichtung 19 dafür sorgt, dass synchron auch die zweite Riegeleinrichtung 21 betätigt wird.

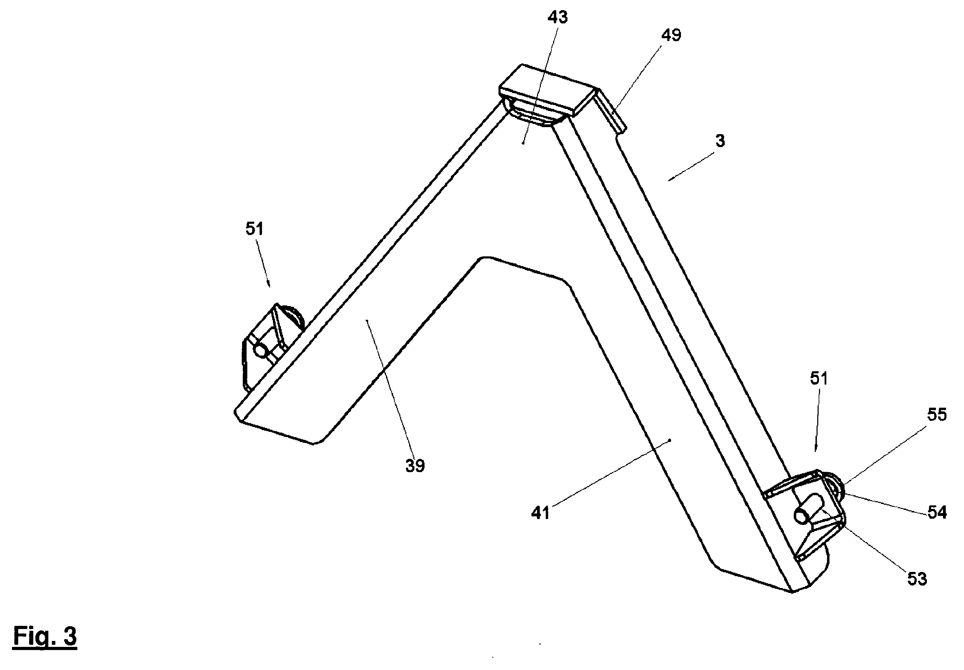

In den Fig. 3 und 4 ist das Gerätekupplungselement 3 getrennt von dem Fahrzeugkupplungselement 1 dargestellt. Daraus ist zu erkennen, dass das Gerätekupplungselement 3 eine erste und eine zweite Haltestrebe 39, 41 aufweist, die sich ebenfalls von einem Verbindungspunkt 43 dreiecksförmig nach unten weg erstrecken, so dass die Haltestreben 39, 41 ein Dreieck aufspannen. Die Haltestreben 39, 41 haben jeweils einen L-förmigen Querschnitt, und an den Haltestreben 39, 41 ist jeweils eine vordere Auflagefläche 45 ausgebildet, die parallel zu der durch das Dreieck gebildeten Ebene verläuft. Dabei weisen die vorderen Auflageflächen 45 im montierten Zustand des Gerätekupplungselements 3 in Richtung auf das Fahrzeugkupplungselement 1, wie aus den Fig. 1 und 2 zu erkennen ist.

Außerdem weisen die Haltestreben 39, 41 seitliche Auflageflächen 47 auf, die an einem Schenkel der L-förmigen Haltestreben 39, 41 vorgesehen sind und die im vorliegenden Fall senkrecht zu der vorderen Auflagefläche 45 verlaufen. Die seitlichen Auflagefläche 47 weisen dabei zu dem von den Haltestreben 39, 41 begrenzten Bereich hin. Das bedeutet, dass sie dann, wenn das Fahrzeugkupplungselement 1 in das Gerätekupplungselement eingesetzt ist (Fig. 1 und 2), auch zu dem Fahrzeugkupplungselement 1 weisen.

Auch wenn im vorliegenden Ausführungsbeispiel die Schenkel der Haltestreben 39, 41 senkrecht zueinander verlaufen, soll der Begriff "L-förmig" im Sinne der vorliegenden Erfindung nicht auf solche Haltstreben begrenzt sein, deren Schenkel rechtwinklig zueinander angeordnet sind, sondern dieser Begriff soll auch solche Haltestreben decken, bei denen die Schenkel einen Winkel einschließen, der größer als 90° ist.

Des Weiteren ist aus den Fig. 3 und 4 zu erkennen, dass das Gerätekupplungselement 3 im Bereich des Verbindungspunktes 43 eine Eingriffsplatte 49 aufweist, die beabstandet zu der vorderen Auflagefläche 45 verläuft und zu dieser weist. Dabei ist die Eingriffsplatte 49 in diesem bevorzugten Ausführungsbeispiel geneigt zu den vorderen Auflageflächen 45 angeordnet.

Schließlich sind an den freien, von dem Verbindungspunkt 43 wegweisenden Enden der Haltestreben 39, 41 Riegelelemente 51 angeordnet, die mit den Riegeleinrichtungen 19, 21 am Fahrzeugkupplungselement 1 derart eingreifen können, das beim Eingriff eine Bewegung der Haltestreben 39, 41 weg von den Streben 7, 9 des Fahrzeugkupplungselements verhindert wird.

In dem hier beschriebenen Ausführungsbeispiel sind die Riegelelemente 51 an dem Schenkel der Haltestreben 39, 41 mit den seitlichen Auflageflächen 47 auf der Seite angeordnet sind, die von dem Bereich, der von den Haltestreben 39, 31 eingeschlossen ist, abgewandt ist. Dadurch wird erreicht, dass die Riegelelemente 51 nicht in den Bereich vorstehen, der durch die Haltestreben 39, 41 abgeschirmt ist, sodass dieser innere Bereich für Kraftübertragungselemente wie eine Zapfwelle frei bleibt.

Die Riegelelement 51 sind jeweils als Bolzen 53 ausgebildet, der einen ersten Abschnitt 54 mit einem kreisförmigen Querschnitt sowie einen weiteren Abschnitt 55 mit einem gegenüber dem ersten Abschnitt 54 vergrößerten Querschnitt aufweist. Die Bolzen 53 sind dabei so an den Haltestreben 39, 41 angebracht, dass sie sich über die Kante des Schenkels der Haltestreben 39, 41 mit den seitlichen Auflageflächen 47 hinaus weg von den vorderen Auflageflächen 45 erstrecken. Sie stehen damit über das durch die Haltestreben 39, 41 gebildete Dreieck in Richtung des Fahrzeugkupplungselement 1 vor.

Der erste Abschnitt 54 der Bolzen 53 mit dem kreisförmigen Querschnitt ist an die Aussparungen 27, 35 in den Riegelarmen 23, 31 derart angepasst, dass die ersten Abschnitte 54 der Bolzen 53 in diesen Aussparungen 27, 35 aufgenommen werden können, während die Abschnitte 55 mit dem vergrößerten Querschnitt an der von den vorderen Anlageflächen 45 abgewandten Seite der Riegelarme 27, 31 anliegen (siehe Fig. 2). Somit sind die Riegelelemente 51 und die Riegeleinrichtungen 19, 21 derart ausgestaltet sind, dass beim Eingriff eine Bewegung der Haltestreben 39, 41 weg von den Streben 7, 9 in einer Richtung senkrecht zu der durch die Streben 7, 9 aufgespannten Ebene verhindert wird.

Im vorliegenden Ausführungsbeispiel ist der erste Riegelarm 23 der ersten Riegeleinrichtung 19 mit einem Verriegelungselement 57 versehen, das dazu dient, den ersten Riegelarm 23 daran zu hindern, zurück in die in Fig. 1 gezeigte Stellung zu schwenken, wenn auf das Fahrzeugkupplungselement 1 eine Kraft wirkt, die es nach unten weg von dem Gerätekupplungselement 3 drückt. Das Verriegelungselement 57 ist also ausgestaltet, den ersten Riegelarm 23 in der Stellung zu verriegeln, in der er mit dem Riegelelement 51 in Form des Bolzens 53 eingreift.

Im vorliegenden Ausführungsbeispiel ist nur am ersten Riegelarm 23 ein solches Verriegelungselement 57 vorgesehen, was aufgrund der Kopplungsstange 37 ausreichend ist, da sich der zweite Riegelarm 31 nicht unabhängig von dem ersten Riegelarm 31 bewegen kann. Es ist aber auch denkbar, dass insbesondere dann, wenn eine solche Kopplung nicht vorliegt, an beiden Riegelarmen 23, 31 Verriegelungselemente 57 zur Verriegelung der Riegelarme 23, 31 in der Eingriffsstellung vorgesehen sind.

Wie in Fig. 2 gezeigt, ist das Verriegelungselement 57 um eine Schwenkachse 61 schwenkbar, die auf der von dem Verbindungspunkt 11 abgewandten Seite der Verbindungslinie 63 angeordnet ist, die zwischen der Schwenkachse 25 des Riegelarms und dessen Aussparung 27 verläuft. Des Weiteren ist das Verriegelungselement 57 derart angeordnet, dass der Anlagepunkt in der Verriegelungsfläche 59, in dem die Verriegelungsfläche 59 zur Anlage mit dem Abschnitt 55 des Bolzens 53 kommt, ebenfalls auf der von dem Verbindungspunkt 11 abgewandten Seite der zuvor definierten Verbindungslinie 63 liegt. Schließlich ist an dem ersten Riegelarm noch ein Anschlag 65 vorgesehen, der ein Verschwenken des Verriegelungselements 57 weg von der Verbindungslinie 63, die bereits zuvor definiert worden ist, verhindert.

Durch eine derartige Anordnung des Verriegelungselements 57 wird erreicht, dass der erste Riegelarm 23 dann nicht zu der ersten Strebe 7 hin verschwenkt werden kann, wenn das Verriegelungselement 57 zuvor nicht entgegen des Uhrzeigersinns (Fig. 2) weg von dem Anschlag 65 verschwenkt wird, so dass die Verriegelungsfläche 59 nicht mehr an dem Abschnitt 55 des Bolzens 53 anliegt. Auf der anderen Seite verhindert das Verriegelungselement 57 nicht, dass der erste Riegelarm 23 beim Verschwenken hin zu dem Bolzen 53 diesen in der Aussparung 27 aufnimmt, da es dann durch den Bolzen 53 weggedrückt bzw. verschwenkt wird.

Das zuvor beschriebene Ausführungsbeispiel eines Kupplungssystems umfassend ein Fahrzeugkupplungselement 1 und ein Gerätekupplungselement 3 wird in der im Folgenden beschriebenen Weise gekoppelt.

Wie sich dabei zeigt, kommt es nicht darauf an, dass die Elemente 1, 3 anfänglich so zueinander ausgerichtet sind, dass die von ihnen aufgespannten Dreiecke in einer gemeinsamen Ebene verlaufen. Vielmehr kann das Fahrzeugkupplungselement 1 von unten kommend mit dem Gerätekupplungselement 3 unabhängig davon gekoppelt werden, ob beide parallel oder verkippt zueinander sind.

Zum Ankoppeln wird das Fahrzeugkupplungselement 1 zunächst so an das Gerätekupplungselement 3 herangefahren, dass die Spitze nahe des Verbindungspunkts 11 des Fahrzeugkupplungselements 1 unterhalb des von der Eingriffsplatte 49 begrenzten Bereichs angeordnet ist. Dann wird das Fahrzeugkupplungselement 1 angehoben, so dass dessen obere Spitze in den Bereich hinter dem Eingriffselement 49 eingreift. Wenn das Fahrzeugkupplungselement 1 nun weiter angehoben wird, wird damit auch das mit dem Gerätekupplungselement 3 verbundene Anbaugerät angehoben, so dass ein Drehmoment wirkt, das dazu führt, dass die vorderen Anlagenflächen 13 an den Streben 7, 9 des Fahrzeugkupplungselements 1 mit den vorderen Auflageflächen 45 an den Haltestreben 39, 41 des Gerätekupplungselements 3 zur Anlage kommen. Wenn dies der Fall ist, wird der erste Riegel 23 aus der in Fig. 1 gezeigten Stellung in die in Fig. 2 gezeigte Stellung verschwenkt, wobei durch die Kopplungsstange 37 erreicht wird, dass der zweite Riegelarm 31 ebenfalls nach außen schwenkt. Dabei kommen die Aussparungen 27, 35 in den Riegelarmen 23, 31 in Eingriff mit den Bolzen 53, wobei deren Abschnitte 55 mit vergrößertem Querschnitt auf der von dem Gerätekupplungselement 3 abgewanden Seite der Riegelarme 23, 31 zur Anlage kommen. Dadurch, dass die Riegelarme 23, 31 mit dem Hinterschnitt an den Bolzen 53 eingreifen, wird verhindert, dass sich die Haltestreben 39, 41 von den Streben 7, 9 des Fahrzeugkupplungselements weg bewegen können.

Beim Verriegeln, d.h. dem nach außen Schwenken der Riegelarme 23, 31, verhindert das Verriegelungselement 57 bei der vorliegenden Anordnung nicht, dass der Bolzen 53 in der Aussparung 27 aufgenommen wird, da das Verriegelungselement 57 zunächst von dem Abschnitt 55 mit vergrößertem Durchmesser zur Seite, das heißt entgegen des Uhrzeigersinns, verschwenkt wird. Anschließend bewegt er sich aufgrund der Schwerkraft in die in Fig. 2 gezeigte Stellung und verriegelt den ersten Riegelarm 23 in dieser Stellung.

Da das Fahrzeugkupplungselement 1 im Bereich insbesondere nahe des Verbindungspunkts 11 keine Vorsprünge an den Streben 7, 9 aufweist, die nach außen weg von dem Bereich weisen, der von Streben 7, 9 eingeschlossen wird, kann es ohne weiteres in ein Gerätekupplungselement gemäß dem Stand der Technik mit Streben mit U-förmigem Querschnitt eingeschoben werden. Das Fahrzeugkupplungselement 1 ist also derart ausgestaltet, dass nicht verhindert wird, dass ein parallel dazu stehendes Gerätekupplungselement aufgenommen wird.

Wie insbesondere aus Fig. 1 zu erkennen ist, wird dies nicht durch die Riegeleinrichtungen 19, 21 verhindert, die im entriegelten Zustand im Inneren des von den Streben 7, 9 aufgespannten Dreiecks sind. Wenn das Fahrzeugkupplungselement 1 mit einem Gerätekupplungselement gemäß dem Stand der Technik gekopplt wird, kann der im Bereich der Verbindungspunkts 11 vorgesehene Riegel mit einer entsprechenden Aussparung in diesem Fahrzeugkupplungselement eingreifen.

## Patentansprüche

1. Kupplungssystem zum Ankoppeln von Anbaugeräten an ein Mehrzweckfahrzeug,
mit einem Fahrzeugkupplungselement (1) zum höhenverstellbaren Anbringen an das Mehrzweckfahrzeug,
wobei das Fahrzeugkupplungselement (1) eine erste und eine zweite Strebe (7, 9) aufweist, die sich von einen Verbindungspunkt (11) nach unten weg erstrecken, sodass die Streben (7, 9) ein Dreieck bilden,
wobei jede Strebe (7, 9) eine vordere Anlagefläche (13) aufweist, die parallel zu der durch das Dreieck gebildeten Ebene verläuft und die bei am Mehrzweckfahrzeug angebrachtem Fahrzeugkupplungselement (1) von diesem weg weist und
wobei jede Strebe (7, 9) eine seitliche Anlagefläche (15) aufweist, die senkrecht oder geneigt zu der vorderen Anlagefläche (13) verläuft und die von dem von den Streben (7, 9) begrenzten Bereich weg weist,
mit einem Gerätekupplungselement (3) zur Befestigung an einem Anbaugerät,
wobei das Gerätekupplungselement (3) eine erste und eine zweite Haltestrebe (39, 41) aufweist, die sich von einen Verbindungspunkt (43) nach unten weg erstrecken, sodass die Haltestreben (39, 41) ein Dreieck bilden,
wobei jede Haltestrebe (39, 41) eine vordere Auflagefläche (45) aufweist, die parallel zu der durch das Dreieck gebildeten Ebene verläuft,
wobei jede Haltestrebe (39, 41) eine seitliche Auflagefläche (47) aufweist, die senkrecht oder geneigt zu der vorderen Auflagefläche (45) verläuft und die bei am Anbaugerät angebrachtem Gerätekupplungselement (3) zu dem von den Haltestreben (39, 41) begrenzten Bereich hin weist,
wobei die Haltestreben (39, 41) einen in Erstreckungsrichtung der Haltestreben (39, 41) gesehen L-förmigen Querschnitt aufweisen,
wobei das Gerätekupplungselement (3) im Bereich des Verbindungspunktes (43) der Haltestreben (39, 41) eine Eingriffsplatte (49) aufweist, die sich beabstandet zu den vorderen Auflageflächen (45) erstreckt und zu diesen weist,
wobei im Bereich der von dem Verbindungspunkt (43) wegweisenden freien Enden der Haltestreben (39, 41) Riegelelemente (51) vorgesehen sind, die sich über die Kante der Schenkel der Haltestreben (39, 41) mit der seitlichen Auflagefläche (47) hinaus von den vorderen Auflageflächen (45) weg erstrecken, und
wobei am Fahrzeugkupplungselement (1) im Bereich der von dem Verbindungspunkt (11) wegweisenden freien Enden der Streben (7, 9) eine erste und eine zweite Riegeleinrichtung (19, 21) zum Eingriff mit den Riegelelementen (51) vorgesehen ist, wobei die Riegelelemente (51) und die Riegeleinrichtungen (19, 21) derart ausgestaltet sind, dass beim Eingriff eine Bewegung der Haltestreben (39, 41) weg von den Streben (7, 9) in einer Richtung senkrecht zu der durch die Streben (7, 9) aufgespannten Ebene verhindert wird,
**dadurch gekennzeichnet,**
**dass** die erste und die zweite Riegeleinrichtung (19, 21) derart über ein Kopplungselement (37) gekoppelt sind, dass bei Betätigung der ersten Riegeleinrichtung (19) auch die zweite Riegeleinrichtung (21) betätigt wird.

2. Kupplungssystem nach Anspruch 1, wobei das Fahrzeugkupplungselement (1) im Bereich des Verbindungspunktes (11) einen federvorgespannten schwenkbaren Riegel (17) aufweist, der zum Eingriff mit einer Öffnung im Bereich des Verbindungspunktes eines dreieckförmigen Gerätekupplungselements vorgesehen ist.

3. Kupplungssystem nach Anspruch 1 oder 2, wobei die Riegelelemente (51) an dem Schenkel der Haltestreben (39, 41) mit den seitlichen Auflageflächen (47) auf der Seite angeordnet sind, die von dem Bereich, der von den Haltestreben (39, 41) eingeschlossen ist, abgewandt ist.

4. Kupplungssystem nach einem der Ansprüche 1 bis 3, wobei die Riegelelemente (51) als sich senkrecht zu der vorderen Auflagefläche (45) erstreckende Bolzen (53) ausgebildet sind, die am von den vorderen Auflageflächen (45) wegweisenden Ende einen erweiterten Querschnitt (55) aufweisen.

5. Kupplungssystem nach Anspruch 4, wobei die erste Riegeleinrichtung (19) einen ersten Riegelarm (23) und die zweite Riegeleinrichtung (21) einen zweiten Riegelarm (31) aufweist, und
wobei die Riegelarme (23, 31) schwenkbar an den Streben (7, 9) gehaltert sind und eine Aussparung (27, 35) zur Aufnahme der Bolzen (53) aufweisen.

6. Kupplungssystem nach Anspruch 5, wobei die erste Riegeleinrichtung (19) einen ersten Riegelarm (23) mit einem Armabschnitt (29) aufweist, der sich über die Schwenkachse (25) des ersten Riegelarms (23) hinaus weg von der Aussparung (25) erstreckt, und
wobei eine Kopplungsstange (37) vorgesehen ist, deren erstes Ende schwenkbar an dem Armabschnitt (29) angelenkt ist und deren zweites Ende schwenkbar an dem zweiten Riegelarm (31) der zweiten Riegeleinrichtung (21) auf der Seite von dessen Schwenkachse (33) angelenkt ist, auf der dessen Aussparung (35) vorgesehen ist.

7. Kupplungssystem nach Anspruch 5 oder 6, wobei der erste Riegelarm (23) ein schwenkbares Verriegelungselement (57) aufweist, das eine Verriegelungsfläche (59) zur Anlage an den Bolzen (53) aufweist,
wobei der Anlagepunkt zwischen dem Bolzen (53) und dem Verriegelungselement (57) auf der von dem Verbindungspunkt (11) abgewandten Seite der Verbindungslinie (63) zwischen der Schwenkachse (25) des ersten Riegelarms (23) und dessen Aussparung (27) liegt,
wobei die Schwenkachse (61) des Verriegelungselements auf der von dem Verbindungspunkt (11) abgewandten Seite der Verbindungslinie (63) zwischen der Schwenkachse (25) des ersten Riegelarms (23) und dessen Aussparung (27) liegt und
wobei der erste Riegelarm (23) einen Anschlag (65) aufweist, der ein Verschwenken des Verriegelungselements (57) weg von der Verbindungslinie (63) zwischen der Schwenkachse (25) des ersten Riegelarms (23) und dessen Aussparung (27) verhindert.

8. Kupplungssystem nach einem der Ansprüche 1 bis 7, wobei die Eingriffsplatte (49) geneigt zu den vorderen Auflageflächen (45) verläuft.

9. Fahrzeugkupplungselement zum höhenverstellbaren Anbringen an ein Mehrzweckfahrzeug und zum Ankoppeln eines Gerätekupplungselement (3),
mit einer ersten und einen zweite Strebe (7, 9), die sich von einen Verbindungspunkt (11) nach unten weg erstrecken, sodass die Streben (7, 9) ein Dreieck bilden,
wobei jede Strebe (7, 9) eine vordere Anlagefläche (13) aufweist, die parallel zu der durch das Dreieck gebildeten Ebene verläuft und die bei am Mehrzweckfahrzeug angebrachtem Fahrzeugkupplungselement (1) von diesem weg weist,
wobei jede Strebe (7, 9) eine seitliche Anlagefläche (15) aufweist, die senkrecht oder geneigt zu der vorderen Anlagefläche (13) verläuft und die von dem von den Streben (7, 9) begrenzten Bereich weg weist,
wobei im Bereich der von dem Verbindungspunkt (11) wegweisenden freien Enden der Streben (7, 9) eine erste und eine zweite Riegeleinrichtung (19, 21) zum Eingriff mit Riegelelementen (51) am Gerätekupplungselement (3) vorgesehen ist, wobei die Riegeleinrichtungen (19, 21) derart ausgestaltet sind, dass beim Eingriff eine Bewegung des Gerätekupplungselements (3) weg von den Streben (7, 9) in einer Richtung senkrecht zu der durch die Streben (7, 9) aufgespannten Ebene verhindert wird,
**dadurch gekennzeichnet,**
**dass** die erste und die zweite Riegeleinrichtung (19, 21) derart über ein Kopplungselement (37) gekoppelt sind, dass bei Betätigung der ersten Riegeleinrichtung (19) auch die zweite Riegeleinrichtung (21) betätigt wird.

10. Fahrzeugkupplungselement nach Anspruch 9, wobei die erste Riegeleinrichtung (19) einen ersten Riegelarm (23) und die zweite Riegeleinrichtung (21) einen zweiten Riegelarm (31) aufweist, und
wobei die Riegelarme (23, 31) schwenkbar an den Streben (7, 9) gehaltert sind und eine Aussparung (27, 35) zur Aufnahme der Bolzen (53) aufweisen.

11. Fahrzeugkupplungselement nach Anspruch 10, wobei die erste Riegeleinrichtung (19) einen ersten Riegelarm (23) mit einem Armabschnitt (29) aufweist, der sich über die Schwenkachse (25) des ersten Riegelarms (23) hinaus weg von der Aussparung (27) erstreckt und
wobei eine Kopplungsstange (37) vorgesehen ist, deren erstes Ende schwenkbar an dem Armabschnitt (29) angelenkt ist und deren zweites Ende schwenkbar an dem zweiten Riegelarm (31) der zweiten Riegeleinrichtung (21) auf der Seite von dessen Schwenkachse (33) angelenkt ist, auf der dessen Aussparung (35) vorgesehen ist.

12. Fahrzeugkupplungselement nach Anspruch 10 oder 11, wobei der erste Riegelarm (23) ein schwenkbares Verriegelungselement (57) aufweist, das eine Verriegelungsfläche (59) zur Anlage an einen sich durch die Aussparung (27) erstreckenden Bolzen (53) aufweist,
wobei der Anlagepunkt zwischen dem Bolzen (53) und dem Verriegelungselement (57) auf der von dem Verbindungspunkt (11) abgewandten Seite der Verbindungslinie (63) zwischen der Schwenkachse (25) des ersten Riegelarms (23) und dessen Aussparung (27) liegt,
wobei die Schwenkachse (61) des Verriegelungselements (57) auf der von dem Verbindungspunkt (11) abgewandten Seite der Verbindungslinie (63) zwischen der Schwenkachse (25) des ersten Riegelarms (23) und dessen Aussparung (27) liegt, und
wobei der erste Riegelarm (23) einen Anschlag (65) aufweist, der ein Verschwenken des Verriegelungselements (57) weg von der Verbindungslinie (63) zwischen der Schwenkachse (25) des ersten Riegelarms (23) und dessen Aussparung (27) verhindert.

## Claims

1. Coupling system for coupling attachment devices to a multi-purpose vehicle, with a vehicle coupling element (1) for height-adjustable attachment to the multi-purpose vehicle, wherein the vehicle coupling element (1) has a first and a second strut (7, 9), which extend downwardly away from a connection point (11), so the struts (7, 9) form a triangle, wherein each strut (7, 9) has a front contact face (13), which runs parallel to the plane formed by the triangle and which, when the vehicle coupling element (1) is attached to the multi-purpose vehicle, points away therefrom and wherein each strut (7, 9) has a lateral contact face (15), which runs perpendicular or inclined with respect to the front contact face (13) and which points away from the region limited by the struts (7, 9), with a device coupling element (3) for fastening to an attachment device, wherein the device coupling element (3) has a first and a second holding strut (39, 41), which extend downwardly away from a connection point (43), so the holding struts (39, 41) form a triangle, wherein each holding strut (39, 41) has a front support face (45), which runs parallel to the plane formed by the triangle, wherein each holding strut (39, 41) has a lateral support face (47), which runs perpendicular or inclined with respect to the front support face (45) and which, when the device coupling element (3) is attached to the attachment device, points to the region limited by the holding struts (39, 41), wherein the holding struts (39, 41) have an L-shaped cross section viewed in the extent direction of the holding struts (39, 41), wherein the device coupling element (3) has an engagement plate (49) in the region of the connection point (43) of the holding struts (39, 41), said engagement plate extending spaced apart from the front support faces (45) and pointing thereto, wherein in the region of the free ends of the holding struts (39, 41) pointing away from the connection point (43), latch elements (51) are provided, which extend beyond the edge of the legs of the holding struts (39, 41) with the lateral support face (47) away from the front support faces (45), and wherein a first and a second latch mechanism (19, 21) for engagement with the latch elements (51) are provided on the vehicle coupling element (1) in the region of the free ends of the struts (7, 9) pointing away from the connection point (11), wherein the latch elements (51) and the latch mechanisms (19, 21) are configured in such a way that upon engagement, a movement of the holding struts (39, 41) away from the struts (7, 9) in a direction perpendicular to the plane spanned by the struts (7, 9) is prevented, **characterised in that** the first and the second latch mechanism (19, 21) are coupled by means of a coupling element (37) in such a way that, upon actuation of the first latch mechanism (19), the second latch mechanism (21) is also actuated.

2. Coupling system according to claim 1, wherein the vehicle coupling element (1) in the region of the connection point (11) has a spring-pretensioned pivotable latch (17), which is provided for engagement with an opening in the region of the connection point of a triangular device coupling element.

3. Coupling system according to claim 1 or 2, wherein the latch elements (51) are arranged on the leg of the holding struts (39, 41) with the lateral support faces (47) on the side, which is remote from the region, which is enclosed by the holding struts (39, 41).

4. Coupling system according to any one of claims 1 to 3, wherein the latch elements (51) are configured as bolts (53) which extend perpendicular to the front support face (45) and have a widened cross section (55) at the end pointing away from the front support faces (45).

5. Coupling system according to claim 4, wherein the first latch mechanism (19) has a first latch arm (23) and the second latch mechanism (21) has a second latch arm (31), and wherein the latch arms (23, 31) are pivotably held on the struts (7, 9) and have a recess (27, 35) to receive the bolts (53).

6. Coupling system according to claim 5, wherein the first latch mechanism (19) has a first latch arm (23) with an arm portion (29), which extends beyond the pivot axis (25) of the first latch arm (23) away from the recess (27), and wherein a coupling bar (37) is provided, the first end of which is pivotably articulated to the arm portion (29) and the second end of which is pivotably articulated to the second latch arm (31) of the second latch mechanism (21) on the side of its pivot axis (33), on which its recess (35) is provided.

7. Coupling system according to claim 5 or 6, wherein the first latch arm (23) has a pivotable locking element (57), which has a locking face (59) to rest on the bolt (53), wherein the contact point between the bolt (53) and the locking element (57) lies on the side of the connecting line (63) remote from the connection point (11) between the pivot axis (25) of the first latch arm (23) and its recess (27), wherein the pivot axis (61) of the locking element rests on the side of the connecting line (63) remote from the connection point (11) between the pivot axis (25) of the first latch arm (23) and its recess (27) and wherein the first latch arm (23) has a stop (65), which prevents a pivoting of the locking element (57) away from the connecting line (63) between the pivot axis (25) of the first latch arm (23) and its recess (27).

8. Coupling system according to any one of claims 1 to 7, wherein the engagement plate (49) runs inclined with respect to the front support faces (45).

9. Vehicle coupling element for height-adjustable attachment to a multi-purpose vehicle and for coupling a device coupling element (3), with a first and a second strut (7, 9), which extend downwardly away from a connection point (11), so the struts (7, 9) form a triangle, wherein each strut (7, 9) has a front contact face (13), which runs parallel to the plane formed by the triangle and which, when the vehicle coupling element (1) is attached to the multi-purpose vehicle, points away therefrom, wherein each strut (7, 9) has a lateral contact face (15), which runs perpendicular or inclined with respect to the front contact face (13) and which points away from the region limited by the struts (7, 9), wherein a first and a second latch mechanism (19, 21) for engagement with latch elements (51) are provided on the device coupling element (3) in the region of the free ends of the struts (7, 9) pointing away from the connection point (11), wherein the latch mechanisms (19, 21) are configured in such a way that upon engagement, a movement of the device coupling element (3) away from the struts (7, 9) in a direction perpendicular to the plane spanned by the struts (7, 9) is prevented, **characterised in that** the first and the second latch mechanism (19, 21) are coupled by a coupling element (37) in such a way that upon actuation of the first latch mechanism (19), the second latch mechanism (21) is also actuated.

10. Vehicle coupling element according to claim 9, wherein the first latch mechanism (19) has a first latch arm (23) and the second latch mechanism (21) has a second latch arm (31), and wherein the latch arms (23, 31) are pivotably held on the struts (7, 9) and have a recess (27, 35) to receive the bolts (53).

11. Vehicle coupling element according to claim 10, wherein the first latch mechanism (19) has a first latch arm (23) with an arm portion (29), which extends beyond the pivot axis (25) of the first latch arm (23) away from the recess (27) and wherein a coupling rod (37) is provided, the first end of which is pivotably articulated to the arm portion (29) and the second end of which is pivotably articulated to the second latch arm (31) of the second latch mechanism (21) on the side of its pivot axis (33), on which its recess (35) is provided.

12. Vehicle coupling element according to claim 10 or 11, wherein the first latch arm (23) has a pivotable locking element (57), which has a locking face (59) to rest on a bolt (53) extending through the recess (27), wherein the contact point between the bolt (53) and the locking element (57) lies on the side of the connecting line (63) remote from the connection point (11) between the pivot axis (25) of the first latch arm (23) and its recess (27), wherein the pivot axis (61) of the locking element (57) lies on the side of the connecting line (63) remote from the connection point (11) between the pivot axis (25) of the first latch arm (23) and its recess (27), and wherein the first latch arm (23) has a stop (65), which prevents a pivoting of the locking element (57) away from the connecting line (63) between the pivot axis (25) of the first latch arm (23) and its recess (27).

## Revendications

1. Système d'attelage destiné à arrimer des matériels annexes à un véhicule polyvalent, avec un élément d'arrimage au véhicule (1) destiné à être installé à une hauteur réglable sur le véhicule polyvalent,
dans lequel l'élément d'arrimage au véhicule (1) présente un premier et un second montants (7, 9) qui s'étendent en s'éloignant vers le bas à partir d'un point de jonction (11), de telle sorte que les montants (7, 9) forment un triangle,
dans lequel chaque montant (7, 9) présente une surface d'appui avant (13) qui s'étend parallèlement au plan formé par le triangle et qui, lorsque l'élément d'arrimage au véhicule (1) est installé sur le véhicule polyvalent, est dirigée à l'opposé dudit élément d'arrimage au véhicule, et
dans lequel chaque montant (7, 9) présente une surface d'appui latérale (15) qui s'étend perpendiculairement ou de façon inclinée par rapport à la surface d'appui avant (13) et qui est dirigée à l'opposé de la zone délimitée par les montants (7, 9), avec un élément d'arrimage au matériel (3) destiné à être fixé à un matériel annexe,
dans lequel l'élément d'arrimage au matériel (3) présente un premier et un second montants de retenue (39, 41) qui s'étendent en s'éloignant vers le bas à partir d'un point de jonction (43), de telle sorte que les montants de retenue (39, 41) forment un triangle,
dans lequel chaque montant de retenue (39, 41) présente une surface d'appui avant (45) qui s'étend parallèlement au plan formé par le triangle,
dans lequel chaque montant de retenue (39, 41) présente une surface d'appui latérale (47) qui s'étend perpendiculairement ou de façon inclinée par rapport à la surface d'appui avant (45) et qui, lorsque l'élément d'arrimage au matériel (3) est installé sur le matériel annexe, est dirigée vers la zone délimitée par les montants de retenue (39, 41),
dans lequel les montants de retenue (39, 41) présentent une coupe transversale en forme de L lorsqu'elle est considérée dans le sens dans lequel les montants de retenue (39, 41) s'étendent,
dans lequel l'élément d'arrimage au matériel (3) présente, dans la zone du point de jonction (43) des montants de retenue (39, 41), une plaque d'engagement (49) qui s'étend à distance des surfaces d'appui avant (45) et est dirigée vers celles-ci,
dans lequel sont prévus, dans la zone des extrémités libres des montants de retenue (39, 41) dirigées à l'opposé du point de jonction (43), des éléments de verrouillage (51) qui s'étendent en s'éloignant à partir des surfaces d'appui avant (45) et au-delà de l'arête des branches des montants de retenue (39, 41) avec la surface d'appui latérale (47), et
dans lequel sont prévus sur l'élément d'arrimage au véhicule (1), dans la zone des extrémités libres des montants (7, 9) dirigées à l'opposé du point de jonction (11), un premier et un second dispositifs de verrouillage (19, 21) destinés à s'engager avec les éléments de verrouillage (51), dans lequel les éléments de verrouillage (51) et les dispositifs de verrouillage (19, 21) sont conçus de telle sorte que dans la position d'engagement, est empêché un mouvement des montants de retenue (39, 41) en s'éloignant des montants (7, 9) dans une direction perpendiculaire au plan défini par les montants (7, 9),
**caractérisé en ce que**
le premier et le second dispositifs de verrouillage (19, 21) sont arrimés via un élément d'arrimage (37) de telle sorte que lors de l'actionnement du premier dispositif de verrouillage (19), le second dispositif de verrouillage (21) est également actionné.

2. Système d'attelage selon la revendication 1, dans lequel l'élément d'arrimage au véhicule (1) présente, dans la zone du point de jonction (11), un verrou pivotant précontraint par un ressort (17), qui est prévu pour un engagement avec une ouverture dans la zone du point de jonction d'un élément triangulaire d'arrimage au matériel.

3. Système d'attelage selon la revendication 1 ou 2, dans lequel les éléments de verrouillage (51) sont agencés sur la branche des montants de retenue (39, 41) avec les surfaces d'appui latérales (47) sur le côté qui est dirigé à l'opposé de la zone qui est définie par les montants de retenue (39, 41).

4. Système d'attelage selon l'une des revendications 1 à 3, dans lequel les éléments de verrouillage (51) sont réalisés sous la forme de boulons (53) s'étendant perpendiculairement à la surface d'appui avant (45) et présentant une coupe transversale (55) élargie à l'extrémité dirigée à l'opposé des surfaces d'appui avant (45).

5. Système d'attelage selon la revendication 4, dans lequel le premier dispositif de verrouillage (19) présente un premier bras de verrouillage (23) et le second dispositif de verrouillage (21) un second bras de verrouillage (31), et
dans lequel les bras de verrouillage (23, 31) sont supportés de façon pivotante sur les montants (7, 9) et présentent un évidement (27, 35) destiné à recevoir les boulons (53).

6. Système d'attelage selon la revendication 5, dans lequel le premier dispositif de verrouillage (19) présente un premier bras de verrouillage (23) avec une section de bras (29) qui s'étend en s'éloignant à partir de l'évidement (25) et au-delà de l'axe de pivotement (25) du premier bras de verrouillage (23), et
dans lequel est prévue une barre d'arrimage (37) dont la première extrémité est articulée de façon pivotante sur la section de bras (29), et dont la seconde extrémité est articulée de façon pivotante sur le second bras de verrouillage (31) du second dispositif de verrouillage (21) sur le côté de son axe de pivotement (33) sur lequel son évidement (35) est prévu.

7. Système d'attelage selon la revendication 5 ou 6, dans lequel le premier bras de verrouillage (23) présente un élément de verrouillage pivotant (57) qui présente une surface de verrouillage (59) destinée à prendre appui sur le boulon (53),
dans lequel le point d'appui entre le boulon (53) et l'élément de verrouillage (57) se situe sur le côté opposé au point de jonction (11) de la ligne de jonction (63) entre l'axe de pivotement (25) du premier bras de verrouillage (23) et son évidement (27),
dans lequel l'axe de pivotement (61) de l'élément de verrouillage se situe sur le côté opposé au point de jonction (11) de la ligne de jonction (63) entre l'axe de pivotement (25) du premier bras de verrouillage (23) et son évidement (27), et
dans lequel le premier bras de verrouillage (23) présente une butée (65) qui empêche un pivotement de l'élément de verrouillage (57) en s'éloignant de la ligne de jonction (63) entre l'axe de pivotement (25) du premier bras de verrouillage (23) et son évidement (27).

8. Système d'attelage selon l'une des revendications 1 à 7, dans lequel la plaque d'engagement (49) s'étend de façon inclinée par rapport aux surfaces d'appui avant (45).

9. Élément d'arrimage à un véhicule destiné à être installé à une hauteur réglable sur un véhicule polyvalent et à arrimer un élément d'arrimage à un matériel (3),
avec un premier et un second montants (7, 9) qui s'étendent en s'éloignant vers le bas à partir d'un point de jonction (11), de telle sorte que les montants (7, 9) forment un triangle, dans lequel chaque montant (7, 9) présente une surface d'appui avant (13) qui s'étend parallèlement au plan formé par le triangle et qui, lorsque l'élément d'arrimage au véhicule (1) est installé sur le véhicule polyvalent, est dirigée à l'opposé dudit élément d'arrimage au véhicule,
dans lequel chaque montant (7, 9) présente une surface d'appui latérale (15) qui s'étend perpendiculairement ou de façon inclinée par rapport à la surface d'appui avant (13) et qui est dirigée à l'opposé de la zone délimitée par les montants (7, 9),
dans lequel sont prévus, dans la zone des extrémités libres des montants (7, 9) dirigées à l'opposé du point de jonction (11), un premier et un second dispositifs de verrouillage (19, 21) destinés à s'engager avec des éléments de verrouillage (51) sur l'élément d'arrimage au matériel (3), dans lequel les dispositifs de verrouillage (19, 21) sont conçus de telle sorte que dans la position d'engagement, est empêché un mouvement de l'élément d'arrimage au matériel (3) en s'éloignant des montants (7, 9) dans une direction perpendiculaire au plan défini par les montants (7, 9),
**caractérisé en ce que**
le premier et le second dispositifs de verrouillage (19, 21) sont arrimés via un élément d'arrimage (37) de telle sorte que lors de l'actionnement du premier dispositif de verrouillage (19), le second dispositif de verrouillage (21) est également actionné.

10. Élément d'arrimage à un véhicule selon la revendication 9, dans lequel le premier dispositif de verrouillage (19) présente un premier bras de verrouillage (23) et le second dispositif de verrouillage (21) un second bras de verrouillage (31), et
dans lequel les bras de verrouillage (23, 31) sont supportés de façon pivotante sur les montants (7, 9) et présentent un évidement (27, 35) destiné à recevoir les boulons (53).

11. Élément d'arrimage à un véhicule selon la revendication 10, dans lequel le premier dispositif de verrouillage (19) présente un premier bras de verrouillage (23) avec une section de bras (29) qui s'étend en s'éloignant à partir de l'évidement (27) et au-delà de l'axe de pivotement (25) du premier bras de verrouillage (23), et
dans lequel est prévue une barre d'arrimage (37) dont la première extrémité est articulée de façon pivotante sur la section de bras (29), et dont la seconde extrémité est articulée de façon pivotante sur le second bras de verrouillage (31) du second dispositif de verrouillage (21) sur le côté de son axe de pivotement (33) sur lequel son évidement (35) est prévu.

12. Élément d'arrimage à un véhicule selon la revendication 10 ou 11, dans lequel le premier bras de verrouillage (23) présente un élément de verrouillage pivotant (57) qui présente une surface de verrouillage (59) destinée à prendre appui sur un boulon (53) s'étendant à travers l'évidement (27),
dans lequel le point d'appui entre le boulon (53) et l'élément de verrouillage (57) se situe sur le côté opposé au point de jonction (11) de la ligne de jonction (63) entre l'axe de pivotement (25) du premier bras de verrouillage (23) et son évidement (27),
dans lequel l'axe de pivotement (61) de l'élément de verrouillage (57) se situe sur le côté opposé au point de jonction (11) de la ligne de jonction (63) entre l'axe de pivotement (25) du premier bras de verrouillage (23) et son évidement (27), et
dans lequel le premier bras de verrouillage (23) présente une butée (65) qui empêche un pivotement de l'élément de verrouillage (57) en s'éloignant de la ligne de jonction (63) entre l'axe de pivotement (25) du premier bras de verrouillage (23) et son évidement (27).
